# EUROPÄISCHE PATENTSCHRIFT

(11) **EP 2 797 057 B1**
(45) Veröffentlichungstag und Bekanntmachung des Hinweises auf die Patenterteilung: **17.07.2019**
(21) Anmeldenummer: 13164927.9
(22) Anmeldetag: 23.04.2013
(51) Int. Cl.: G07F 19/00, G06K 7/00, G06K 13/08

(54) **Vorrichtung zum lesen von Magnetstreifen- und/oder Chipkarten und Verfahren zum vermeiden von Skimmingangriffen**
Device for reading magnetic strip and/or chip cards and method for avoiding skimming attacks
Dispositif de lecture de cartes à bande magnétique et/ou à puce et procédé permettant d'éviter les tentatives de clonage

(43) Veröffentlichungstag der Anmeldung: 29.10.2014
(73) Patentinhaber: Wincor Nixdorf International GmbH, 33106 Paderborn (DE)
(72) Erfinder: Neubauer, Lutz, 33181 Bad Wuennenberg - Leiberg (DE)

(56) Entgegenhaltungen:
- DE-B3-102006 049 204
- FR-A1- 2 843 818
- US-A- 5 397 886
- US-A- 5 929 413
- US-B1- 8 418 917

## Beschreibung

Die Erfindung betrifft eine Vorrichtung zum Lesen von Magnetstreifen- und/oder Chipkarten, insbesondere EC-Karten und Kreditkarten, die einen Schlitz zum Zuführen von Magnetstreifen- und/oder Chipkarten in eine Zuführrichtung umfasst, wobei eine zugeführte Magnetstreifen- und/oder Chipkarte beim Zuführen in eine Zuführebene angeordnet ist. Ferner betrifft die Erfindung ein Verfahren zum Vermeiden von Skimmingangriffen, bei dem eine Magnetstreifen- und/oder Chipkarte einer Vorrichtung zum Lesen von Magnetstreifen- und/oder Chipkarten zugeführt wird, wobei die Magnetstreifen- und/oder Chipkarte beim Zuführen in einer Zuführebene angeordnet ist.

Bei Geldautomaten, Kassensystemen, Bezahlterminals und anderen Vorrichtung, in denen Magnetstreifen- und/oder Chipkarten, beispielsweise EC-Karten, Kreditkarten oder Banckarten, zum Bezahlen oder Abheben von Geld eingeführt werden, besteht das Problem, dass Personen in betrügerischer Absicht versuchen, die auf den Karten gespeicherten Daten unberechtigterweise auszulesen und zur Karte gehörige Daten auszuspähen um somit unberechtigt mithilfe dieser Daten Geld abheben zu können. Solche Versuche, die Daten auszuspähen werden als Skimmingangriffe bezeichnet.

Es sind eine Vielzahl von Verfahren bekannt, mit deren Hilfe versucht wird, außen vor dem Zuführschlitz für die Magnetstreifen- und/oder Chipkarte angeordnete Skimmingmodule zu erkennen. Beispielsweise werden die entsprechenden Bereiche mittels Kameras überwacht und Veränderungen am Aufbau detektiert.

Um dies zu vermeiden werden neuerdings vermehrt sehr kleine Miniaturskimmingmodule in den Schlitz, in den auch die Magnetstreifen- und/oder Chipkarte eingeführt wird, eingeführt. Diese Module sind derart ausgebildet, dass sie die Daten der Karten auslesen können, während diese regulär innerhalb der Vorrichtung zum Lesen von Magnetstreifen- und/oder Chipkarten aufgenommen sind.

Aus dem Dokument DE 10 2006 049 204 B2 ist es bekannt, EC-Karten mit ihrer Längsseite voran und somit quer zur Leserichtung des Magnetstreifen in einen Geldautomaten einzuführen. Hierdurch soll verhindert werden, dass an der Außenseite des Geldautomaten angebrachte Skimmingmodule beim Einzug der Karte Daten auslesen können. In dem Geldautomaten wird dann die Bewegungsrichtung der Karte geändert, so dass sie nun mit ihrer kurzen Seite voran transportiert wird und der Magnetstreifen während dieses Transports über einen feststehenden Lesekopf ausgelesen werden kann.

Aus dem Dokument US 5,397,886 ist eine Vorrichtung zum Lesen von Magnetstreifen- und/oder Chipkarten bekannt, bei der die Karte über einen Schlitz eingeführt und weiter zu einer Dreheinheit transportiert wird. Über diese Dreheinheit kann die Karte in verschiedene Positionen verdreht werden, wobei die Sensoren zum Auslesen der Karte jeweils zusammen mit der Dreheinheit mit verdreht werden.

Es ist Aufgabe der Erfindung, eine Vorrichtung zum Lesen von Magnetstreifen- und/oder Chipkarten sowie ein Verfahren zum Verhindern von Skimmingangriffen anzugeben, mit dessen Hilfe auf einfache Weise zuverlässig Skimmingangriffe durch in den Schlitz eingeführte Miniaturskimmingmodule verhindert werden können.

Diese Aufgabe wird durch eine Vorrichtung mit den Merkmalen des Anspruchs 1 sowie durch ein Verfahren mit den Merkmalen des unabhängigen Verfahrensanspruchs gelöst. Vorteilhafte Weiterbildungen der Erfindung sind in den abhängigen Ansprüchen angegeben.

Erfindungsgemäß ist in Zuführrichtung gesehen hinter dem Schlitz eine Dreheinheit zum Drehen einer zugeführten Magnetstreifen- und/oder Chipkarte aus der Zuführebene in eine Leseebene vorgesehen, wobei die Leseebene in einem vorbestimmten Winkel relativ zur Zuführebne verläuft. Durch dieses Drehen der Magnetstreifen- und/oder Chipkarte nach ihrem Zuführen in eine von der Zuführebene verschiedene Leseebene wird erreicht, dass eingeführte Miniaturskimmingmodule, die zwangsläufig in der Zuführebne angeordnet sind, die nun nicht mehr in der Zuführebene angeordnete Chipkarte nicht auslesen können. Somit werden solche Skimmingangriffe zuverlässig und sicher verhindert.

Unter dem Drehen wird in dieser Anmeldung allgemein verstanden, dass die Ausrichtung der Magnetstreifen- und/oder Chipkarte derart geändert wird, dass sich die durch die Magnetstreifen- und/oder Chipkarte bestimmte Ebene verändert. Unter dem Drehen wird insbesondere nicht verstanden, dass die Ausrichtung der Magnetstreifen- und/oder Chipkarte nur innerhalb einer Ebene verändert wird.

Die Zuführebene und die Leseebene sind nicht identisch und auch nicht parallel zueinander.

Darunter, dass die Magnetstreifen- und/oder Chipkarte in einer bestimmten Ebene angeordnet ist, wird insbesondere verstanden, dass sie mit ihrer Fläche, also ihrer Vorder- oder Rückseite, in dieser Ebene liegt.

Der vorbestimmte Winkel hat insbesondere einen Wert von 30° und 120°, vorzugsweise zwischen 80° und 100°. Es ist besonders vorteilhaft, wenn die Leseebene orthogonal zur Zuführebene ist, also der vorbestimmte Winkel einen Wert von 90° hat. Dies heißt, dass die Magnetstreifen- und/oder Chipkarte durch die Dreheinheit um 90° gedreht wird.

Die Zuführebene ist insbesondere horizontal gerichtet. Bei der bevorzugten Ausführungsform, bei der die Leseebene orthogonal zur Zuführebene ist, ist die Leseebene somit vertikal gerichtet.

Bei der Magnetstreifen- und/oder Chipkarte handelt es sich insbesondere um eine EC-Karte, eine Kreditkarte oder eine Bankkarte. Bei der Vorrichtung zum Lesen einer Magnetstreifen- und/oder Chipkarten handelt es sich insbesondere um einen Geldautomaten, ein automatisches Kassensystem, eine automatische Tresorkasse, ein Bezahlterminal oder eine Leseeinheit, die in Automaten verbaut werden kann.

Bei einer bevorzugten Ausführungsform umfasst die Dreheinheit Transportelemente zum Transport der Magnetstreifen- und/oder Chipkarte entlang eines Transportwegs, wobei der Transportweg derart geformt ist, dass die Magnetstreifen- und/oder Chipkarte beim Transport entlang des Transportwegs von der Zuführebene in die Leseebene gedreht wird. Der Transportweg hat insbesondere einen bogenförmigen Abschnitt, durch den die Drehung der Magnetstreifen- und/oder Chipkarte bewirkt wird. Dieser bogenförmige Abschnitt kann insbesondere kreisbogensegmentförmig sein. Im Falle einer Drehung um 90° entspricht dieser kreisbogensegmentförmige Abschnitt insbesondere einem viertelkreisförmigen Abschnitt. Auf diese Weise kann die Magnetstreifen- und/oder Chipkarte auf einfache Weise zuverlässig gedreht werden.

Bei einer alternativen Ausführungsform der Erfindung kann die Dreheinheit auch derart ausgebildet sein, dass die Magnetstreifen- und/oder Chipkarte mit ihrer Hilfe um eine Längsachse der Magnetstreifen- und/oder Chipkarte von der Zuführebene in die Leseebene drehbar ist, wobei diese Längsachse beim Drehen vorzugsweise ortsfest ist. Die Dreheinheit umfasst hierzu insbesondere mindestens ein Greifelement zum Greifen einer eingeführten Magnetstreifen- und/oder Chipkarte, wobei dieses Greifelement vorzugsweise derart mithilfe einer Antriebseinheit verstellbar ist, dass die gegriffene Magnetstreifen- und/oder Chipkarte um den vorbestimmten Winkel gedreht werden kann. Somit wird eine besonders einfache bauraumsparende Dreheinheit realisiert.

Es sind insbesondere zwei Greifelemente vorgesehen, die die Magnetstreifen- und/oder Chipkarte an gegenüberliegenden Seiten greifen. Die beiden Greifelemente können vorzugsweise synchron gedreht werden, so dass die Magnetstreifen- und/oder Chipkarte entsprechend gedreht wird ohne dass Torsionskräfte auf sie einwirken und eventuell Beschädigungen auftreten.

Für den Fall, dass die Magnetstreifen- und/oder Chipkarte mit ihrer Längsseite voran zugeführt wird, sind die Greifelemente insbesondere derart angeordnet, dass sie die Magnetstreifen- und/oder Chipkarte an ihren beiden kurzen Seiten greifen. Insbesondere greifen die Greifelemente die Magnetstreifen- und/oder Chipkarte jeweils derart, dass sie weder den Magnetstreifen noch den Chip kontaktieren. Somit wird sichergestellt, dass der Magnetstreifen bzw. der Chip ausgelesen werden kann, während die Magnetstreifen- und/oder Chipkarte nach wie vor von den Greifelementen gehalten ist. Alternativ können auch bei der Zuführung der Magnetstreifen- und/oder Chipkarte mit einer ihrer Längsseiten voran die Greifelemente an den beiden Längsseiten angeordnet sein.

Es ist besonders vorteilhaft, wenn die Dreheinheit die Magnetstreifen- und/oder Chipkarte um diejenige ihrer Längsachsen dreht, die orthogonal zur Zuführrichtung verläuft. Auf diese Weise kann eine besonders einfache Ausbildung der Vorrichtung erreicht werden. Alternativ kann die Dreheinheit die Magnetstreifen- und/oder Chipkarte auch um diejenige ihrer Längsachsen drehen, die in Zuführrichtung verläuft.

Die Dreheinheit ist unmittelbar hinter dem Schlitz angeordnet, wodurch sichergestellt wird, dass ihre Ausrichtung sofort geändert wird bevor ein eventuell eingebrachtes Skimmingmodul auf die Daten zugreifen kann. Insbesondere wird somit auch der Platz für eventuell einzubringende Skimmingmodule minimiert.

Der Schlitz ist vorzugsweise derart dimensioniert, dass die Magnetstreifen- und/oder Chipkarte mit einer ihrer längeren Seiten voran in den Schlitz zum Zuführen zu der Vorrichtung einführbar ist. Dies hat den Vorteil, dass die Magnetstreifen- und/oder Chipkarte quer zur Leserichtung des Magnetstreifens zugeführt wird, so dass ein vor dem Schlitz angebrachtes Skimmingmodul beim Zuführen der Magnetstreifen- und/oder Chipkarte diese Daten nicht auslesen kann.

Die Vorrichtung weist eine Leseeinheit zum Auslesen von auf dem Magnetstreifen der Magnetstreifen- und/oder Chipkarte gespeicherten Daten und/oder zum Auslesen von auf dem Chip der Magnetstreifen- und/oder Chipkarte gespeicherten Daten auf. Die Leseeinheit ist insbesondere derart ausgebildet, dass die Magnetstreifen- und/oder Chipkarte nur dann gelesen werden kann, wenn sie in der Leseebene angeordnet ist.

Bei einer besonders bevorzugten Ausführungsform umfasst die Leseeinheit einen entlang des Magnetstreifens einer in der Leseebene an einer Leseposition angeordneten Magnetstreifen- und/oder Chipkarte bewegbaren Lesekopf zum Lesen der auf dem Magnetstreifen gespeicherten Daten. Somit kann der Magnetstreifen ausgelesen werden, ohne dass die Magnetstreifen- und/oder Chipkarte hierzu bewegt werden muss. Dies ist besonders vorteilhaft, da nach dem Drehen der Magnetstreifen- und/oder Chipkarte somit kein Transport innerhalb der Leseebene notwendig ist.

Ein weiterer Aspekt der Erfindung betrifft ein Verfahren zum Vermeiden von Skimmingangriffen, bei dem die Magnetstreifen- und/oder Chipkarte nach dem Zuführen gedreht wird, so dass sie in einer Leseebene angeordnet ist, die in einem vorbestimmten Winkel relativ zu der Zuführebene, in der die Magnetstreifenkarte beim Zuführen angeordnet war, verläuft. Durch dieses Verfahren wird das Auslesen von auf dem Magnetstreifen oder dem Chip gespeicherten Daten durch in den Schlitz eingebrachte Skimmingmodule vermieden.

Das Verfahren kann mit den in den auf den unabhängigen Vorrichtungsanspruch rückbezogenen abhängigen Vorrichtungsansprüchen beschriebenen Merkmalen bzw. entsprechende Verfahrensmerkmale weitergebildet werden.

Weitere Merkmale und Vorteile der Erfindung ergeben sich aus der folgenden Beschreibung, die die Erfindung anhand von Ausführungsbeispielen näher erläutert.

Es zeigen:
- Figur 1: eine schematische Darstellung eines Geldautomaten;
- Figur 2: eine schematische Darstellung eines Ausschnitts des Geldautomaten nach Figur 1;
- Figur 3: eine schematische Darstellung der Zuführung einer Magnetstreifen- und/oder Chipkarte in einem ersten Betriebszustand;
- Figur 4: eine schematische Darstellung der Zuführung der Magnetstreifen- und/oder Chipkarte in einem zweiten Betriebszustand; und
- Figur 5: eine schematische Darstellung der Zuführung der Magnetstreifen- und/oder Chipkarte in einem dritten Betriebszustand.

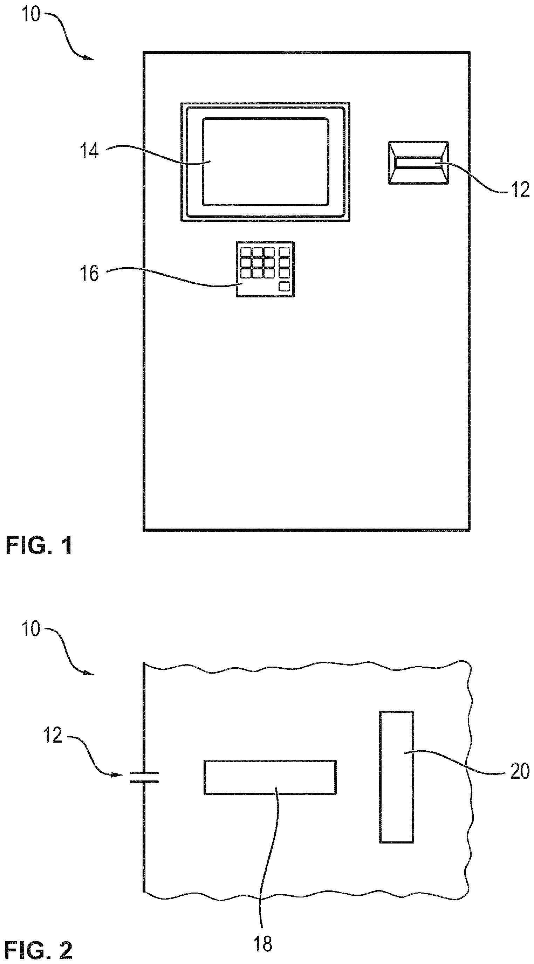

In Figur 1 ist eine schematische Darstellung einer Vorrichtung 10 zum Lesen einer Magnetstreifen- und/oder Chipkarte dargestellt. Die Vorrichtung 10 nach Figur 1 ist in Form eines Geldautomaten ausgebildet. Alternativ kann es sich bei der Vorrichtung 10 auch um ein automatisches Kassensystem, eine automatische Tresorkasse, ein mobiles Bezahlterminal, ein stationäres Bezahlterminal oder jegliche andere Vorrichtung zum Lesen von Magnetstreifen- und/oder Chipkarten, die in anderen Vorrichtung verbaut werden kann, handeln. Bei der Magnetstreifen- und/oder Chipkarte handelt es sich insbesondere um eine Bankkarte, eine EC-Karte und/oder eine Kreditkarte.

Der Geldautomat 10 umfasst einen Schlitz 12 zum Einführen von Magnetstreifen- und/oder Chipkarten. Ferner hat der Geldautomat 10 einen Bildschirm 14 zur Anzeige von Informationen an eine Bedienperson und eine Tastatur 16, die u.a. zur Eingabe der PIN, die einer eingeführten Magnetstreifen- und/oder Chipkarte zugeordnet ist, dient, um somit die Bedienperson zu authentifizieren. Bei einer alternativen Ausführungsform der Erfindung kann auch auf eine Tastatur 16 verzichtet werden, wenn der Bildschirm 14 als Touchscreen ausgebildet ist, so dass die Eingabe der PIN und weiterer Informationen über diesen Touchscreen 14 erfolgen kann.

Bei neuartigen Skimmingangriffen wird von den den Skimmingangriff durchführenden Personen ein Miniaturskimmingmodul in den Schlitz 12 eingebracht, das derart ausgebildet ist, dass es die Daten einer in den Schlitz regulär eingeführten Magnetstreifen- und/oder Chipkarte auslesen kann. Ferner wird von den den Skimmingangriff durchführenden Personen die PIN ausgespäht, was beispielsweise mithilfe einer verdeckt angebrachten Kamera oder einer auf der eigentlichen Tastatur 16 angebrachten weiteren Tastatur erfolgen kann. Kennt die den Skimmingangriff durchführende Person somit sowohl die Daten der Magnetstreifen- und/oder Chipkarte als auch die PIN, kann diese unberechtigt Geld vom Konto, das zu der Magnetstreifen- und/oder Chipkarte gehört, abheben.

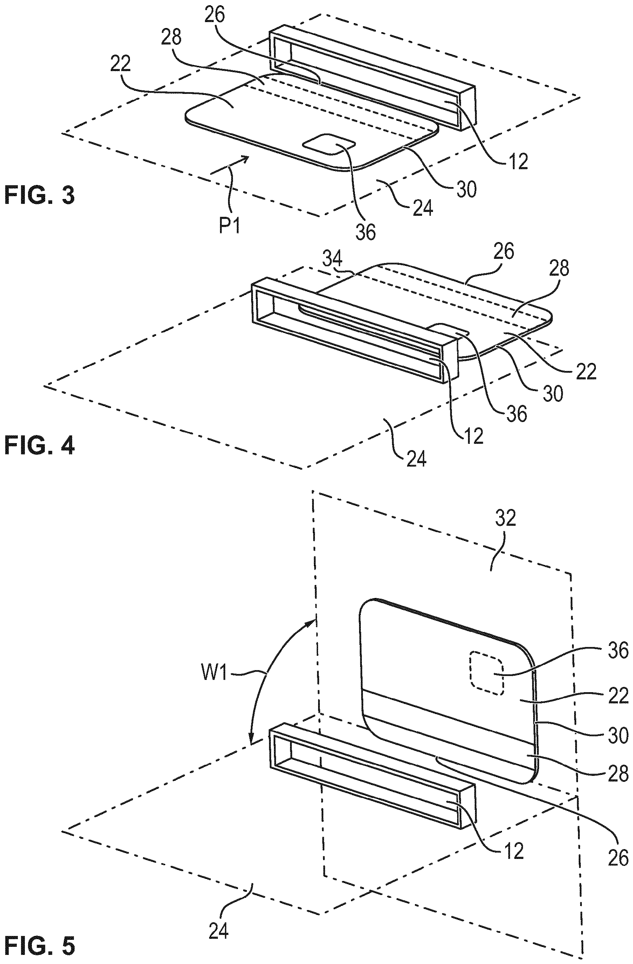

Um solche Skimmingangriffe mit eingeführten Skimmingmodulen zu verhindern, wird der in Figur 2 schematisch dargestellte Aufbau verwendet, dessen Funktionsweise im Zusammenhang mit den Figuren 3 bis 5 schematisch erläutert wird.

Erfindungsgemäß ist hinter dem Schlitz 12 eine Dreheinheit 18 zum Drehen einer Magnetstreifen- und/oder Chipkarte vorgesehen. Die Magnetstreifen- und/oder Chipkarte 22 wird, wie in Figur 3 schematisch dargestellt, in einer Zuführebene 24 in eine Zuführrichtung P1 zugeführt. Die Zuführebene 24 ist hierbei diejenige Ebene, in der die Magnetstreifen- und/oder Chipkarte 22 beim Zuführen über den Schlitz 12 angeordnet ist. Bei den in den Figuren 1 und 2 dargestellten Ausführungsbeispiel ist diese Zuführebene horizontal angeordnet.

Bei einer bevorzugten Ausführungsform wird, wie in Figur 3 dargestellt, die Magnetstreifen- und/oder Chipkarte 22 mit einer ihrer längeren Kanten 26 voran zugeführt, was den Vorteil hat, dass sie quer zur Leserichtung des Magnetstreifen 28 zugeführt wird und somit der Magnetstreifen 28 nicht beim Zuführen der Magnetstreifen- und/oder Chipkarte 22 durch ein eventuell vor dem Schlitz 12 angebrachtes Skimmingmodul ausgelesen werden kann. Bei einer alternativen Ausführungsform der Erfindung kann das Zuführen der Magnetstreifen- und/oder Chipkarte 22 aber auch mit einer ihrer kürzeren Kanten 30 voran erfolgen.

In Figur 4 ist ein zweiter Betriebszustand dargestellt, bei dem die Magnetstreifen- und/oder Chipkarte 22 soweit in die Vorrichtung 10 eingeführt ist, dass sie vollständig hinter dem Schlitz 12 angeordnet ist. Die Magnetstreifen- und/oder Chipkarte 22 befindet sich in diesem zweiten Betriebszustand nach wie vor innerhalb der Zuführebene 24. Mithilfe der Dreheinheit 18 wird die Magnetstreifen- und/oder Chipkarte 22 unmittelbar nach dem Zuführen um 90° gedreht, so dass sie nun in einer Leseebene 32 angeordnet ist, die entsprechend senkrecht zur Zuführebene 24 angeordnet ist. Bei einer alternativen Ausführungsform der Erfindung kann die Magnetstreifen- und/oder Chipkarte 22 auch um einen von 90° abweichenden Winkel, insbesondere um einen Winkel zwischen 45° und 135°, gedreht werden.

Die Dreheinheit 18 umfasst insbesondere zwei Greifelemente, die an den kurzen Seiten 30, 34 der Magnetstreifen- und/oder Chipkarte 22 die Magnetstreifen- und/oder Chipkarte 22 greifen. Hierbei greifen die Greifelemente die Magnetstreifen- und/oder Chipkarte 22 insbesondere in Bereichen, in denen weder der Magnetstreifen 28 noch der Chip 36 angeordnet sind. Die Greifelemente sind insbesondere mithilfe einer Antriebseinheit drehbar, so dass über eine synchrone Drehung der beiden Greifelemente die von ihnen gegriffene Magnetstreifen- und/oder Chipkarte 22 entsprechend gedreht werden kann.

Bei einer alternativen Ausführungsform der Erfindung kann die Magnetstreifen- und/oder Chipkarte 22 auch mithilfe einer Transporteinheit gedreht werden, wobei die Transporteinheit in diesem Fall insbesondere einen entsprechend bogenförmigen Abschnitt aufweist, durch den die Drehung der Magnetstreifen- und/oder Chipkarte 22 beim Transport entlang dieses Transportabschnitts erfolgt.

Ferner ist auch jede weitere Möglichkeit zur Drehung der Magnetstreifen- und/oder Chipkarte 22 möglich. Entscheidend ist lediglich, dass die Magnetstreifen- und/oder Chipkarte 22 möglichst unmittelbar nach ihrer Eingabe um den vorbestimmten Winkel gedreht wird.

Nachdem die Magnetstreifen- und/oder Chipkarte 22 um den vorbestimmten Winkel gedreht wurde und somit, wie in Figur 5 gezeigt, in der Leseebene 32 angeordnet ist, kann die Magnetstreifen- und/oder Chipkarte 22 über eine Leseeinheit 20 (Figur 2) ausgelesen werden. Diese Leseeinheit 20 umfasst insbesondere ein Kontaktelement, welches den Chip 36 der Magnetstreifen- und/oder Chipkarte 22 kontaktiert, wenn dieser in der Leseebene 32 in einer Leseposition angeordnet ist. Ferner umfasst die Leseeinheit 20 einen bewegbaren Magnetkopf, der bei einer Bewegung entlang des Magnetstreifens 28 der Magnetstreifen- und/oder Chipkarte 22 diesen auslesen kann.

Durch die Drehung der Magnetstreifen- und/oder Chipkarte 22 wird erreicht, dass ein eventuell über dem Schlitz 12 eingeführtes Skimmingmodul nicht auf der Magnetstreifen- und/oder Chipkarte 22 liegen bleiben kann und somit nicht in Kontakt mit dem Chip 36 der Magnetstreifen- und/oder Chipkarte 22 verbleiben kann. Somit kann die Magnetstreifen- und/oder Chipkarte 22 nur von der Leseeinheit 20 ausgelesen werden und das Auslesen der Daten durch unberechtigte Personen wird zuverlässig vermieden.

### Bezugszeichenliste

- 10: Vorrichtung
- 12: Schlitz
- 14: Bildschirm
- 16: Tastatur
- 18: Dreheinheit
- 20: Leseeinheit
- 22: Magnetstreifen- und/oder Chipkarte
- 24: Zuführebene
- 26, 30, 34: Kante
- 28: Magnetstreifen
- 32: Leseebene
- 36: Chip
- P1: Zuführrichtung
- W1: Winkel

## Patentansprüche

1. Vorrichtung zum Lesen von Magnetstreifen- und/oder Chipkarten,
mit einem Schlitz (12) zum Zuführen einer Magnetsteifen- und/oder Chipkarte (22) in eine Zuführrichtung (P1), wobei die Magnetsteifen- und/oder Chipkarte (22) beim Zuführen in einer Zuführebene (24) angeordnet ist,
wobei die Vorrichtung (10) eine Leseeinheit (20) zum Auslesen von auf einem Magnetstreifen (28) der Magnetstreifen- und/oder Chipkarte (22) gespeicherten Daten und/oder zum Auslesen von auf einem Chip (36) der Magnetstreifen- und/oder Chipkarte (22) gespeicherten Daten umfasst,
wobei in Zuführrichtung (P1) gesehen hinter dem Schlitz (12) eine Dreheinheit (18) zum Drehen einer zugeführten Magnetstreifen- und/oder Chipkarte (22) aus der Zuführebene (24) in eine Leseebene (32), die in einem vorbestimmten Winkel (W1) relativ zur Zuführebene (24) verläuft, angeordnet ist,
**dadurch gekennzeichnet, dass** die Dreheinheit (18) unmittelbar hinter dem Schlitz (12) angeordnet ist.

2. Vorrichtung (10) nach Anspruch 1, **dadurch gekennzeichnet, dass** der vorbestimmte Winkel (W1) einen Wert zwisehen 30° und 120°, insbesondere zwischen 80° und 100°, hat.

3. Vorrichtung (10) nach Anspruch 1 oder 2, **dadurch gekennzeichnet, dass** die Leseebene (32) orthogonal zur Zuführebene (24) ist.

4. Vorrichtung (10) nach einem der vorhergehenden Ansprüche, **dadurch gekennzeichnet, dass** die Dreheinheit (18) Transportelemente zum Transport der Magnetstreifen- und/oder Chipkarte (22) entlang eines Transportweges umfasst, und dass der Transportweg derart geformt ist, dass die Magnetstreifen- und/oder Chipkarte (22) beim Transport entlang des Transportweges von der Zuführebene (24) in die Leseebene (32) gedreht wird.

5. Vorrichtung (10) nach Anspruch 4, **dadurch gekennzeichnet, dass** der Transportweg einen bogenförmigen Abschnitt, insbesondere kreisbogensegmentförmigen Abschnitt, umfasst.

6. Vorrichtung (10) nach einem der Ansprüche 1 bis 3, **dadurch gekennzeichnet, dass** die Dreheinheit (18) derart ausgebildet ist, dass die Magnetstreifen- und/oder Chipkarte (22) mit ihrer Hilfe um eine Längsachse der Magnetstreifen- und/oder Chipkarte (22) von der Zuführebene (24) in die Leseebene (32) drehbar ist, wobei diese Längsachse beim Drehen vorzugsweise ortsfest ist.

7. Vorrichtung (10) nach Anspruch 6, **dadurch gekennzeichnet, dass** die Dreheinheit (18) mindestens ein Greifelement, vorzugsweise zwei Greifelemente, zum Greifen einer eingeführten Magnetstreifen- und/oder Chipkarte (22) umfasst, und dass das Greifelement bzw. die Greifelemente mit Hilfe einer Antriebeinheit derart verstellbar ist bzw. sind, dass die gegriffene Magnetstreifen- und/oder Chipkarte (22) um den vorbestimmten Winkel (W1) gedreht werden kann.

8. Vorrichtung (10) nach einem der vorhergehenden Ansprüche, **dadurch gekennzeichnet, dass** die Dreheinheit (18) die Magnetstreifen- und/oder Chipkarte (22) um diejenige ihrer Längsachse dreht, die orthogonal zur Zuführrichtung (P1) verläuft.

9. Vorrichtung (10) nach einem der Ansprüche 1 bis 7, **dadurch gekennzeichnet, dass** die Dreheinheit (18) die Magnetstreifen- und/oder Chipkarte (22) um diejenige ihrer Längsachse dreht, die in Zuführrichtung (P1) verläuft.

10. Vorrichtung (10) nach einem der vorhergehenden Ansprüche, **dadurch gekennzeichnet, dass** der Schlitz (12) derart dimensioniert ist, dass die Magnetstreifen- und/oder Chipkarte (22) mit einer ihrer längeren Seiten (26) voran in den Schlitz (12) zum Zuführen zu der Vorrichtung (10) einführbar ist.

11. Vorrichtung (10) nach einem der vorhergehenden Ansprüche, **dadurch gekennzeichnet, dass** die Leseeinheit (20) derart ausgebildet, dass die Magnetstreifen- und/oder Chipkarte (22) nur dann gelesen werden kann, wenn sie in der Leseebene (32) angeordnet ist.

12. Vorrichtung (10) nach einem der vorhergehenden Ansprüche, **dadurch gekennzeichnet, dass** die Leseeinheit (20) einen entlang des Magnetstreifens (28) einer in der Leseebene (32) an einer Leseposition angeordneten Magnetstreifen- und/oder Chipkarte (22) bewegbaren Lesekopf zum Lesen der auf dem Magnetstreifen (28) gespeicherten Daten umfasst.

13. Verfahren zum Vermeiden von Skimming Angriffen,
bei dem eine Magnetstreifen- und/oder Chipkarte (22) einer Vorrichtung (10) zum Lesen von Magnetstreifen- und/oder Chipkarten (22) zugeführt wird, wobei die Magnetstreifen- und/oder Chipkarte (22) beim Zuführen in einer Zuführebene (24) angeordnet ist,
wobei die Vorrichtung (10) eine Leseeinheit (20) zum Auslesen von auf einem Magnetstreifen (28) der Magnetstreifen- und/oder Chipkarte (22) gespeicherten Daten und/oder zum Auslesen von auf einem Chip (36) der Magnetstreifen- und/oder Chipkarte (22) gespeicherten Daten umfasst, und
wobei die Magnetstreifen- und/oder Chipkarte (22) nach dem Zuführen gedreht wird, so dass sie in einer Leseebene (32) angeordnet ist, die in einem vorbestimmten Winkel (W1) relativ zur Zuführebene (24) verläuft,
**dadurch gekennzeichnet, dass** die Dreheinheit (18) unmittelbar hinter dem Schlitz (12) angeordnet ist.

## Claims

1. Device for reading magnetic strip and/or chip cards,
having a slot (12) for feeding a magnetic strip and/or chip card (22) in a feed direction (P1), the magnetic strip and/or chip card (22) being arranged in a feed plane (24) during feeding,
the device (10) comprising a reading unit (20) for reading data stored on a magnetic strip (28) of the magnetic strip and/or chip card (22) and/or for reading data stored on a chip (36) of the magnetic strip and/or chip card (22),
a rotary unit (18) for rotating a magnetic strip and/or chip card (22) fed in from the feed plane (24) into a reading plane (32), which extends at a predetermined angle (W1) relative to the feed plane (24), the rotary unit being arranged behind the slot (12) as seen in the feed direction (P1), **characterized in that** the rotary unit (18) is arranged immediately behind the slot (12).

2. Device (10) according to Claim 1, **characterized in that** the predetermined angle (W1) has a value between 30° and 120°, in particular between 80° and 100°.

3. Device (10) according to Claim 1 or 2, **characterized in that** the reading plane (32) is orthogonal to the feed plane (24).

4. Device (10) according to one of the preceding claims, **characterized in that** the rotary unit (18) comprises transport elements for transporting the magnetic strip and/or chip card (22) along a transport path, and **in that** the transport path is shaped in such a way that the magnetic strip and/or chip card (22) is rotated from the feed plane (24) into the reading plane (32) during transport along the transport path.

5. Device (10) according to Claim 4, **characterized in that** the transport path comprises an arcuate section, in particular a section in the shape of a circular arc segment.

6. Device (10) according to one of Claims 1 to 3, **characterized in that** the rotary unit (18) is formed in such a way that the magnetic strip and/or chip card (22) can be rotated with the help of said rotary unit from the feed plane (24) into the reading plane (32) about a longitudinal axis of the magnetic strip and/or chip card (22), this longitudinal axis preferably being stationary during the rotation.

7. Device (10) according to Claim 6, **characterized in that** the rotary unit (18) comprises at least one gripping element, preferably two gripping elements, for gripping an inserted magnetic strip and/or chip card (22), and **in that** the gripping element or the gripping elements is or can be displaced with the aid of a drive unit such that the gripped magnetic strip and/or chip card (22) can be rotated by the predetermined angle (W1).

8. Device (10) according to one of the preceding claims, **characterized in that** the rotary unit (18) rotates the magnetic strip and/or chip card (22) about that of its longitudinal axis which extends orthogonally to the feed direction (P1).

9. Device (10) according to one of Claims 1 to 7, **characterized in that** the rotary unit (18) rotates the magnetic strip and/or chip card (22) about that of its longitudinal axis which extends in the feed direction (P1).

10. Device (10) according to one of the preceding claims, **characterized in that** the slot (12) is dimensioned in such a way that the magnetic strip and/or chip card (22) can be inserted into the slot (12) with one of its longer sides (26) in front in order to feed it to the device (10).

11. Device (10) according to one of the preceding claims, **characterized in that** the reading unit (20) is formed in such a way that the magnetic strip and/or chip card (22) can be read only when it is arranged in the reading plane (32).

12. Device (10) according to one of the preceding claims, **characterized in that** the reading unit (20) comprises a reading head that can be moved along the magnetic strip (28) of a magnetic strip and/or chip card (22) arranged at a reading position in the reading plane (32) to read the data stored on the magnetic strip (28).

13. Method for avoiding skimming attacks,
in which a magnetic strip and/or chip card (22) is fed to a device (10) for reading magnetic strip and/or chip cards (22), the magnetic strip and/or chip card (22) being arranged in a feed plane (24) during feeding,
the device (10) comprising a reading unit (20) for reading data stored on a magnetic strip (28) of the magnetic strip and/or chip card (22) and/or for reading data stored on a chip (36) of the magnetic strip and/or chip card (22), and
the magnetic strip and/or chip card (22) being rotated after the feeding so that it is arranged in a reading plane (32), which extends at a predetermined angle (W1) relative to the feed plane (24),
**characterized in that** the rotary unit (18) is arranged immediately behind the slot (12).

## Revendications

1. Dispositif pour lire des cartes à piste magnétique et/ou à puce,
comprenant une fente (12) servant à amener une carte à piste magnétique et/ou à puce (22) dans une direction d'amenée (P1), la carte à piste magnétique et/ou à puce (22) étant disposée dans un plan d'amenée (24) lors de l'amenée,
le dispositif (10) comportant une unité de lecture (20) destinée à lire des données enregistrées sur une piste magnétique (28) de la carte à piste magnétique et/ou à puce (22) et/ou pour lire des données enregistrées sur une puce (36) de la carte à piste magnétique et/ou à puce (22),
une unité de rotation (18), destinée à faire tourner une carte à piste magnétique et/ou à puce (22) amenée hors du plan d'amenée (24) dans un plan de lecture (32), lequel s'étend sous un angle (W1) prédéterminé par rapport au plan d'amenée (24), étant disposée derrière la fente (12) vue dans le sens de l'amenée (P1),
**caractérisé en ce que** l'unité de rotation (18) est disposée directement derrière la fente (12).

2. Dispositif (10) selon la revendication 1, **caractérisé en ce que** l'angle (W1) prédéterminé possède une valeur entre 30° et 120°, notamment entre 80° et 100°.

3. Dispositif (10) selon la revendication 1 ou 2, **caractérisé en ce que** le plan de lecture (32) est orthogonal au plan d'amenée (24).

4. Dispositif (10) selon l'une des revendications précédentes, **caractérisé en ce que** l'unité de rotation (18) comporte des éléments de transport destinés à transporter la carte à piste magnétique et/ou à puce (22) le long d'un trajet de transport, et **en ce que** le trajet de transport est façonné de telle sorte que la carte à piste magnétique et/ou à puce (22) est tournée du plan d'amenée (24) dans le plan de lecture (32) lors du transport le long du trajet de transport.

5. Dispositif (10) selon la revendication 4, **caractérisé en ce que** le trajet de transport comporte une portion cintrée, notamment une portion en forme de segments d'arc de cercle.

6. Dispositif (10) selon l'une des revendications 1 à 3, **caractérisé en ce que** l'unité de rotation (18) est configurée de telle sorte que la carte à piste magnétique et/ou à puce (22) peut être tournée à l'aide de celle-ci autour d'un axe longitudinal de la carte à piste magnétique et/ou à puce (22) du plan d'amenée (24) dans le plan de lecture (32), cet axe longitudinal étant de préférence fixe lors de la rotation.

7. Dispositif (10) selon la revendication 6, **caractérisé en ce que** l'unité de rotation (18) comporte au moins un élément de préhension, de préférence deux éléments de préhension, pour la préhension d'une carte à piste magnétique et/ou à puce (22) insérée, et **en ce que** l'élément de préhension ou les éléments de préhension peut ou peuvent être positionné(s) à l'aide d'une unité d'entraînement de telle sorte que la carte à piste magnétique et/ou à puce (22) saisie peut être tournée autour de l'angle (W1) prédéterminé.

8. Dispositif (10) selon l'une des revendications précédentes, **caractérisé en ce que** l'unité de rotation (18) tourne la carte à piste magnétique et/ou à puce (22) autour de celui de son axe qui s'étend de manière orthogonale à la direction d'amenée (P1).

9. Dispositif (10) selon l'une des revendications 1 à 7, **caractérisé en ce que** l'unité de rotation (18) tourne la carte à piste magnétique et/ou à puce (22) autour de celui de son axe qui s'étend dans la direction d'amenée (P1).

10. Dispositif (10) selon l'une des revendications précédentes, **caractérisé en ce que** la fente (12) est dimensionnée de telle sorte que la carte à piste magnétique et/ou à puce (22) peut être introduite avec l'un de ses côtés les plus longs (26) en avant dans la fente (12) en vue de l'amener vers le dispositif (10).

11. Dispositif (10) selon l'une des revendications précédentes, **caractérisé en ce que** l'unité de lecture (20) est configurée de telle sorte que la carte à piste magnétique et/ou à puce (22) ne peut être lue que lorsqu'elle est disposée dans le plan de lecture (32).

12. Dispositif (10) selon l'une des revendications précédentes, **caractérisé en ce que** l'unité de lecture (20) comporte une tête de lecture pouvant être déplacée le long de la piste magnétique (28) d'une carte à piste magnétique et/ou à puce (22) disposée dans le plan de lecture (32) au niveau d'une position de lecture en vue de lire les données enregistrées sur la piste magnétique (28) .

13. Procédé de prévention des attaques par copiage de carte,
avec lequel une carte à piste magnétique et/ou à puce (22) est amenée à un dispositif (10) pour lire des cartes à piste magnétique et/ou à puce (22), la carte à piste magnétique et/ou à puce (22) étant disposée dans un plan d'amenée (24) lors de l'amenée,
le dispositif (10) comportant une unité de lecture (20) destinée à lire des données enregistrées sur une piste magnétique (28) de la carte à piste magnétique et/ou à puce (22) et/ou pour lire des données enregistrées sur une puce (36) de la carte à piste magnétique et/ou à puce (22), et
la carte à piste magnétique et/ou à puce (22), après l'amenée, étant tournée de sorte qu'elle soit disposée dans un plan de lecture (32), lequel s'étend sous un angle (W1) prédéterminé par rapport au plan d'amenée (24),
**caractérisé en ce que** l'unité de rotation (18) est disposée directement derrière la fente (12).
